# EUROPEAN PATENT APPLICATION

(11) **EP 3 023 471 A1**
(43) Date of publication of application: **25.05.2016**
(21) Application number: 14825596.1
(22) Date of filing: 17.07.2014
(51) Int. Cl.: C09J 175/04, C09J 11/06

(54) **LAMINATE ADHESIVE COMPOSITION**

(30) Priority: 19.07.2013 JP 2013150515
(71) Applicant: DIC Corporation, Tokyo 174-8520 (JP)
(72) Inventor: OHARA Shinichi, Tokyo 174-8520 (JP); ARAI Masamitsu, Tokyo 174-8520 (JP); SHIMAMURA Kenichi, Tokyo 174-8520 (JP); SUZUKI Shinya, Tokyo 174-8520 (JP); TAMAOKA Takashi, Tokyo 174-8520 (JP)
(74) Representative: Beckmann, Claus
(86) International application number: PCT/JP2014/069011
(87) International publication number: WO 2015/008822

(57) **Abstract**

An object of the present invention is to reduce the amount of a chemical substance migrated to food while maintaining adhesion of a transparent vapor deposition film in an adhesive for a flexible package, formed of a polyol and an isocyanate. This object is achieved by a laminate adhesive composition containing a polyester polyol or a polyol such as a polyester polyol, a polyisocyanate, and a silane coupling agent (C), and also preferably a styrene-maleic acid copolymer, in which the silane coupling agent (C) is a mixture of an epoxy silane (c1) and an aminosilane (c2) or a reaction product thereof.

## Description

### Technical Field

The present invention relates to an adhesive composition and a lamination method. In more detail, the present invention relates to a two-liquid mixing type adhesive composition for laminate used when producing a composite film mainly used in packaging materials for food, pharmaceuticals, and detergent, by laminating various plastic films, metal vapor deposition films, or aluminum foils.

### Background Art

Flexible packaging for food containers tends to be increased for the sake of convenience. Therefore, a laminate adhesive has been required to correspond to various types of containers, and high performance thereof has been demanded. On the other hand, in Europe, laws regulating chemical substances migrating from a packaging material to food have been tightened, and interest of citizens in problems caused by migration of chemical substances to food, such as mineral oil contamination is increasing. At present, in Europe, regulations by law for adhesives do not yet exist, but migration of chemical substances from composite plastic films is regulated by commission regulation [EU No.10/2011] on plastic materials and articles intended to come into contact with food, and it is necessary to suppress migration from adhesive components.

Laminate adhesives are generally used as polyol/isocyanate curing type, and widely used in high performance applications such as retort applications. These adhesives are often used for attaching a transparent vapor deposition film to a sealant, rather than attaching an aluminum foil to a sealant, because the contents of food can be confirmed through the packaging material. Therefore, in order to enable adhesion of a vapor deposition film to these films, a silane coupling agent such as an epoxy silane or an aminosilane silane is generally added to an adhesive (for example, refer to PTL 1).

However, when the amount of epoxy silane is increased to retain the adhesion, migration of the epoxy silane to food is increased. Furthermore, when the same adhesive is used in laminate of non-vapor deposition films, migration of a silane coupling agent is increased compared to the adhesive of vapor deposition configuration, and it is necessary to replace the adhesive depending on the configuration.

On the other hand, although migration of an aminosilane to food is small since the aminosilane is reacted with an isocyanate, the adhesive tends to be colored yellow. Therefore, use of an aminosilane and an epoxy silane in combination has been reported (for example, refer to PTL 2). However, since an aminosilane and an epoxy silane are separately added in the technique, a sufficient reaction does not proceed in the aging time for a polyol and an isocyanate, and thus, the epoxy silane tends to be easily migrated.

### Citation List

### Patent Literature

[PTL 1] JP-B-61-4864
[PTL 2] Japanese Patent No. 4226852

### Summary of Invention

### Technical Problem

An object of the present invention, in consideration of the related art, is to provide an adhesive which reduces the amount of a chemical substance migrated to food while maintaining adhesion to a transparent vapor deposition film as an adhesive for a flexible package formed of a polyol and an isocyanate.

### Solution to Problem

As a result of extensive and intensive investigations in order to achieve the above object, the present inventor has found that, when a mixture of an epoxy silane (c1) and an aminosilane (c2) or a reaction product thereof is used as a silane coupling agent (C), migration of the silane coupling agent (C) can be suppressed while maintaining adhesion, thereby completing the present invention.

That is, the present invention provides a laminate adhesive composition containing a polyol, a polyisocyanate, and the silane coupling agent (C), in which the silane coupling agent (C) is a mixture of the epoxy silane (c1) and the aminosilane (c2) or a reaction product thereof.

### Advantageous Effects of Invention

According to the present invention, a laminate adhesive which does not have a risk of migration of a chemical substance to food even in the case of having a configuration without a vapor-deposited layer while imparting adhesion to aluminum and a vapor deposition film, in the field of flexible packaging for food containers, can be provided.

### Description of Embodiments

The present invention includes the following items.
1. A laminate adhesive composition containing a polyol (A), a polyisocyanate (B), and a silane coupling agent (C), in which the silane coupling agent (C) is a mixture of an epoxy silane (c1) and an aminosilane (c2),
2. The laminate adhesive composition according to the item 1, in which the silane coupling agent (C) is a reaction product obtained by a reaction of the mixture of the epoxy silane (c1) and the aminosilane (c2),
3. The laminate adhesive composition according to the item 1 or 2, in which the polyol (A) is a polyester polyol or a polyether polyol,
4. The laminate adhesive composition according to any one of the items 1 to 3, further containing a phosphoric acid derivative or a styrene-maleic anhydride copolymer, and
5. The laminate adhesive composition according to any one of the items 1 to 4, in which the molar ratio between the epoxy silane (c1) and the aminosilane (c2) is within a range of 1/1 to 3/1.

Examples of the polyol resin (A) used in the present invention include a polyol (a1) described below, a polyester polyol obtained by a reaction of the polyol (a1) with a polycarboxylic acid described below, and polyethers obtained by addition-polymerization of monomers such as ethylene oxide, propylene oxide, butylene oxide, styrene oxide, epichlorohydrin, tetrahydrofuran, and cyclohexylene using compounds having two active hydrogen atoms such as ethylene glycol, diethylene glycol, triethylene glycol, propylene glycol, trimethylene glycol, 1,3-butanediol, 1,4-butanediol, 1,6-hexanediol, and neopentyl glycol as an initiator.

Examples of the polyol (a1) include glycols such as ethylene glycol, propylene glycol, 1,3-propanediol, 1,4-butanediol, 1,5-pentanediol, 3-methyl-1,5-pentanediol, 1,6-hexanediol, neopentyl glycol, methyl pentanediol, dimethyl butanediol, butylethyl propanediol, diethylene glycol, triethylene glycol, tetraethylene glycol, dipropylene glycol, tripropylene glycol, bishydroxyethoxybenzene, 1,4-cyclohexanediol, 1,4-cyclohexanedimethanol, triethylene glycol, polycaprolactone diol, dimer diol, bisphenol A, and hydrogenated bisphenol A, polyesters obtained by ring-opening polymerization of cyclic ester compounds such as propiolactone, butyrolactone, s-caprolactone, δ-valerolactone, and β-methyl-δ-valerolactone, and polyethers obtained by addition-polymerization of monomers such as ethylene oxide, propylene oxide, butylene oxide, styrene oxide, epichlorohydrin, tetrahydrofuran, and cyclohexylene using compounds having two active hydrogen atoms such as ethylene glycol, diethylene glycol, triethylene glycol, propylene glycol, trimethylene glycol, 1,3-butanediol, 1,4-butanediol, 1,6-hexanediol, and neopentyl glycol as an initiator.

Examples of the polycarboxylic acid include polybasic acids such as succinic acid, adipic acid, azelaic acid, sebacic acid, dodecane dicarboxylic acid, maleic anhydride, fumaric acid, 1,3-cyclopentanedicarboxylic acid, 1,4-cyclohexanedicarboxylic acid, terephthalic acid, isophthalic acid, phthalic acid, 1,4-naphthalenedicarboxylic acid, 2,5-naphthalenedicarboxylic acid, 2,6-naphthalenedicarboxylic acid, naphthalic acid, biphenyldicarboxylic acid, 1,2-bis(phenoxy)ethane-p,p'-dicarboxylic acid, and anhydrides or ester-forming derivatives of these dicarboxylic acids; and p-hydroxybenzoic acid, p-(2-hydroxyethoxy)benzoic acid, ester-forming derivatives of these dihydroxycarboxylic acids, and dimer acid.

Examples of the polyisocyanate-based curing agent composition (B) include an organic compound having at least two isocyanate groups in the molecule. Examples of the organic polyisocyanate compound include polyisocyanates such as tolylene diisocyanate, xylylene diisocyanate, diphenylmethane diisocyanate, 1, 6-hexamethylene diisocyanate, isophorone diisocyanate, 4,4'-methylene bis(cyclohexylisocyanate), lysine diisocyanate, trimethylhexamethylene diisocyanate, 1,3-(isocyanatomethyl)cyclohexane, 1,5-naphthalene diisocyanate, and triphenylmethane triisocyanate; and polyisocyanate derivatives (modified products) such as adduct compounds of these polyisocyanates, biuret compounds of these polyisocyanates, and isocyanurate compounds of these polyisocyanates.

In addition, a reaction product obtained by reacting the isocyanate with the polyol resin (A) in a mixing ratio in which isocyanate groups become excessive may be used.

The equivalent ratio [(B)/(A)] of the isocyanate equivalent in the polyisocyanate (B) to the hydroxyl group equivalent in the polyol resin (A) is preferably 0.5 to 5.0.

The silane coupling agent (C) used in the present invention is a mixture of the epoxy silane (c1) and the aminosilane (c2) described below or a reaction product obtained by a reaction thereof.

Examples of the epoxy silane (c1) include methacrylic silane-based silane coupling agents such as 3-methacryloxypropyl trimethoxysilane and 3-methacryloxypropyl triethoxysilane; and 3-glycidoxypropyl trimethoxysilane, 3-glycidoxypropyl triethoxysilane, and 2-(3,4-epoxycyclohexyl)ethyl trimethoxysilane.

Examples of the aminosilanes (c2) include γ-aminopropyl trimethoxysilane, γ-aminopropyl triethoxysilane, γ-aminopropyl triisopropoxysilane, γ-aminopropylmethyl dimethoxysilane, γ-aminopropylmethyl diethoxysilane, γ-(2-aminoethyl)aminopropyl trimethoxysilane, N-β-(aminoethyl)aminopropyl trimethoxysilane, γ-(2-aminoethyl)aminopropylmethyl dimethoxysilane, γ-(2-aminoethyl)aminopropyl triethoxysilane, γ-(2-aminoethyl)aminopropylmethyl diethoxysilane, γ-(2-aminoethyl)aminopropyl triisopropoxysilane, γ-(2-(2-aminoethyl)aminoethyl)aminopropyl trimethoxysilane, γ-(6-aminohexyl)aminopropyl trimethoxysilane, N-(2-aminoethyl)-3-aminopropylmethyl dimethoxysilane, N-2-(aminoethyl)-3-aminopropyl trimethoxysilane, 3-aminopropyl triethoxysilane, 4-amino-3,3-dimethylbutyl trimethoxysilane, 4-amino-3,3-dimethylbutyl dimethoxymethylsilane, 3-(N-ethylamino)-2-methylpropyl trimethoxysilane, N-ethyl-3-amino-2-methylpropyl trimethoxysilane, N-ethyl-3-amino-2-methylpropyl diethoxymethylsilane, N-ethyl-3-amino-2-methylpropyl triethoxysilane, N-ethyl-3-amino-2-methylpropylmethyl dimethoxysilane, N-butyl-3-amino-2-methylpropyl trimethoxysilane, 3-(N-methyl-2-amino-1-methyl-1-ethoxy)-propyl trimethoxysilane, N-ethyl-4-amino-3,3-dimethylbutyl dimethoxymethylsilane, N-ethyl-4-amino-3,3-dimethylbutyl trimethoxysilane, γ-ureidopropyl trimethoxysilane, γ-ureidopropyl triethoxysilane, N-phenyl-γ-aminopropyl trimethoxysilane, N-benzyl-γ-aminopropyl trimethoxysilane, and N-vinylbenzyl-γ-aminopropyl triethoxysilane.

The reaction ratio between the epoxy silane (c1) and the aminosilane (c2) is not particularly limited, and, for example, the molar ratio of the epoxy silane (c1) to the aminosilane (c2) [(c1)/(c2)] is preferably 1/1 to 3/1, and particularly preferably 2/1.

The silane coupling agent (C) is preferably added in an amount of 0.1 parts by mass to 2 parts by mass per 100 parts by mass of the polyol.

By further adding a phosphoric acid derivative or a styrene-maleic anhydride copolymer to the laminate adhesive composition of the present invention, the amount of the silane coupling agent (C) migrated can be further reduced.

Examples of the phosphoric acid derivative include orthophosphoric acid and polyphosphoric acid.

Examples of the styrene-maleic anhydride copolymer include a compound represented by the following Formula (1). In Formula (1), m is preferably 1 to 8, and n is preferably 8 to 12.

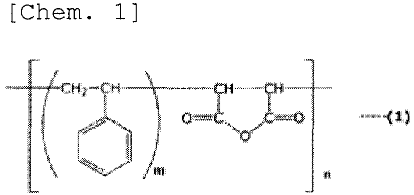

The styrene-maleic anhydride copolymer is obtained by radical-copolymerizing styrene and maleic anhydride by various methods. In addition, commercially available products can also be used, and examples thereof include SMA3000, SMA1000, SMA2000, EF30, EF40, EF60, and EF80 manufactured by Sartomer Japan Inc.

The phosphoric acid derivative and the styrene-maleic anhydride copolymer may be used alone, or may be used in combination.

As the mixing ratio when both are used, the phosphoric acid derivative is preferably 0.1 parts by mass to 1.0 part by mass per 100 parts by mass of the polyol, and the styrene-maleic anhydride copolymer is preferably 1.0 part by mass to 10 parts by mass per 100 parts by mass of the polyol, respectively.

The laminate adhesive composition of the present invention may contain an additive other than the additives described above, if necessary. As the additive other than the above described additives, additives generally used in a resin composition for forming a film, a coating film, or the like are exemplified. Examples of the additives include a leveling agent; inorganic fine particles such as colloidal silica and alumina sol; polymethyl methacrylate-based organic fine particles; an antifoaming agent; an antisagging agent; a wetting and dispersing agent; a silane coupling agent; a viscosity modifier; an ultraviolet absorbent; a metal deactivator; a peroxide decomposer; a flame retardant; a reinforcing agent; a plasticizer; a lubricant; an anticorrosive agent; a fluorescent whitening agent; an inorganic heat ray absorber; a flame proofing agent; an antistatic agent; and a dehydrating agent.

The laminate adhesive composition of the present invention can be generally prepared by blending respective components other than a polyisocyanate compound which is a curing agent to thereby prepare a main agent premix in advance and mixing the premix with a polyisocyanate compound.

The lamination method of the present invention is a method which includes applying the adhesive composition to a substrate using a gravure coater, a die coater or a lip coater, drying the resultant, and attaching the dried resultant to another substrate. In the die coater and the lip coater, by deckles which are installed at both ends of a die or a lip portion, the coating width can be freely adjusted. In a case where a volatile acidic compound is used, when the acidic compound volatilizes, an adhesive is gelled, and thus, the pH is required to be always maintained within a range of 1 to 8, and preferably maintained within a range of 3 to 7.

The amount of adhesive to be applied is about 0.5 g/m² to 6.0 g/m², and preferably 1.0 g/m² to 4.0 g/m².

### Examples

Hereinafter, the contents and effects of the present invention will be described in more detail with reference to examples. Moreover, "parts" in the examples indicates "parts by mass".

### (Production Example 1) [Main Agent Preparation Example]

10.0 parts of ethylene glycol, 21.1 parts of neopentyl glycol, 10.0 parts of 1,6-hexanediol, 8.0 parts of Tsunodyme 216, 21. 5 parts of isophthalic acid, 21. 5 parts of terephthalic acid, 23.4 parts of adipic acid, and 0.006 parts of a titanium catalyst were put into a polyester reaction vessel equipped with a stirrer, a thermometer, a nitrogen gas introducing inlet, a rectifying tube, and a water separator, and by slowly heating the mixture such that the temperature of the upper part of the rectifying tube did not exceed 100°C, the inner temperature was maintained at 240°C. The reaction was continued until the acid value became 2 mgKOH/g or less. The pressure was reduced to 10 mmHg or less, and this pressure was maintained for 1.5 hours to end the esterification reaction, whereby an intermediate polyester polyol having a hydroxyl value of 28 was obtained. 8.9 parts of isophorone diisocyanate was added to 100 parts of the obtained intermediate polyester polyol, and a urethanization reaction was performed by heating to 120°C until NCO% became 3.1, whereby polyester urethane polyisocyanate was obtained. After this was diluted with 111.9 parts of ethyl acetate, the temperature was lowered to 40°C, and maintained at 50°C for about 1 hour, whereby a polyurethane polyester polyol resin solution U having a non-volatile content of 60% was obtained.

### (Production Example 2) [Additive]

As an epoxy silane (c1), 3-glycidoxypropyl trimethoxysilane (KBM-403, manufactured by Shin-Etsu Chemical Co., Ltd.) was used, as an aminosilane (c2), 3-aminopropyl trimethoxysilane (KBM-903, manufactured by Shin-Etsu Chemical Co., Ltd.) was used, as the phosphoric acid, 85% phosphoric acid manufactured by Wako Pure Chemical Industries, Ltd. was used, and as the styrene-maleic anhydride copolymer (SMA), a reagent having a Mw of 7, 500 manufactured by Wako Pure Chemical Industries, Ltd. was used.

### (Production Example 3) [Silane Coupling Agent (C) Reaction Product]

For the reaction products of the epoxy silane (c1) and the aminosilane (c2), the epoxy silane (c1) and the aminosilane (c2) were put into respective flasks such that the molar ratios became 0.5:1, 1:1, 2:1, 3:1, and 4:1, and the mixtures were allowed to react at 40°C for 7 hours, respectively, whereby reaction products A, B, C, D, and E were obtained.

### (Production Example 4) [Silane Coupling Agent (C) Mixture]

The epoxy silane (c1) and the aminosilane (c2) were put into respective flasks such that the molar ratios became 1:1, 2:1, and 3:1, and the epoxy silane (c1) and the aminosilane (c2) were mixed, whereby mixtures A, B, and C were obtained.

### (Examples 1 to 8)

According to the compositional ratios shown in Table 1, the polyol resin solution U, an aromatic polyisocyanate (KW-75, manufactured by DIC Corporation), a silane compound, phosphoric acid, and styrene maleic acid were blended, whereby mixtures having a solid content of 30% were obtained. A PET film and a polypropylene film were attached using each of the obtained mixtures by the method described below, and a chemical migration test and a measurement of peel strength were performed. The obtained results are shown in Table 1. The reaction products used in the examples were the reaction products A to E obtained in Production Example 3.

### (Examples 9 to 11)

According to the compositions shown in Table 2, a chemical migration test and a measurement of peel strength were performed in the same manner as in Examples 1 to 8. The obtained results are shown in Table 2. The reaction products used in the examples were the mixtures A to C obtained in Production Example 4.

### (Comparative Examples 1 to 3)

Blended solutions were prepared in the same manner as in Example 1 except that raw materials were used according to the compositional ratios shown in Table 3, and various tests were performed thereon. Moreover, as described in the claims of "Japanese Patent No. 4226852", in Comparative Example 4, an aminosilane was put into the polyol U, and stirring was performed for 1 hour, whereby a polyol UA was given. On the other hand, an epoxy silane was put into a polyisocyanate I in advance, and stirring was performed for 1 hour, whereby a polyisocyanate IE was given. A blended solution was adjusted by blending the polyol and the polyisocyanate in the same manner as in Example 1. The obtained results are shown in Table 3.

### [Chemical Migration Test]

As a laminate product, a PET film (E5100, manufactured by Toyobo Co. , Ltd. , 12 µm) and a CPP film (ZK93KM, manufactured by TORAY ADVANCED FILM CO., LTD., 70 µm) were adhered using an adhesive (solid content of 3.5 g/m²), and the resultant product was aging-stored at 40°C for 72 hours. The chemical migration test was performed according to EN13130. A pouch was prepared such that the contact portion of the content became 200 cm², and filled with 100 mL of 95% ethanol as a food pseudo-solution. After the prepared pouch was stored at 60°C for 10 days, 100 mL of 95% ethanol was concentrated to 5 mL, and the silane compound was quantified using GC-MS. As the unit of the amount migrated, mg/kg-food of the EU standards was used. The minimum limit of quantitation of the silane compound is 0.001 mg/kg-food.

### <Measurement Conditions>

GC-MS: GC2100A manufactured by Shimadzu Corporation
Column: polydimethylsiloxane-based column

### [Hue of Coating Liquid]

The hue of a coating liquid was measured using a Gardner colorimeter.

### [Peel Strength]

As a laminate product, a PET film (E5100, manufactured by Toyobo Co., Ltd., 12 µm), aluminum foil (12 µm), and a CPP film (ZK93KM, manufactured by TORAY ADVANCED FILM CO., LTD., 70 µm) were adhered using an adhesive (solid content of 3.5 g/m²), and the resultant product was aging-stored at 40°C for 72 hours. Thereafter, a pouch was prepared such that the contact portion of the content became 200 cm², and filled with 50 mL of a solution of vinegar:meat sauce:sake = 1:1:1 as a food pseudo-solution content. A steam sterilization treatment was performed on the pouch filled with the solution at 135°C for 30 minutes, and the peel strength of the heat seal part where the content was removed was measured.

### <Measurement Conditions>

Using a tensile testing machine, at an ambient temperature of 25°C, the peeling rate was set to 300 mm/min, the tensile strength when measured by a T-type peeling method was taken as an adhesive strength, and, as the unit of the adhesive strength, N/15 mm was used.

**[Table 1]**

| | Example 1 | Example 2 | Example 3 | Example 4 | Example 5 | Example 6 | Example 7 | Example 8 |
|---|---|---|---|---|---|---|---|---|
| Polyol U | 100 | 100 | 100 | 100 | 100 | 100 | 100 | 100 |
| Polyisocyanate I | 10 | 10 | 10 | 10 | 10 | 10 | 10 | 10 |
| Epoxy silane | | | | | | | | |
| Aminosilane | | | | | | | | |
| Reaction product A | | | | | | | | |
| Reaction product B | | | | 0.5 | | 0.5 | 0.5 | 0.5 |
| Reaction product C | 1 | 0.5 | 0.3 | | | | | |
| Reaction product D | | | | | 0.5 | | | |
| Reaction product E | | | | | | | | |
| Phosphoric acid | | | | | | 0.3 | | 0.3 |
| SMA | | | | | | | 2 | 2 |
| Ethyl acetate | 160 | 160 | 160 | 160 | 160 | 160 | 160 | 160 |
| Amount migrated (µg/kg-food) | | | | | | | | |
| Epoxy silane | 9 | 7 | 5 | 5 | 9 | ND | ND | ND |
| Aminosilane | ND | ND | ND | ND | ND | ND | ND | ND |
| Reaction product A | - | - | - | - | - | - | - | - |
| Reaction product B | - | - | - | ND | - | ND | ND | ND |
| Reaction product C | ND | ND | ND | - | - | - | - | - |
| Reaction product D | - | - | - | - | ND | - | - | - |
| Reaction product E | - | - | - | - | - | - | - | - |
| Hue of coating liquid | 1-2 | 1-2 | 1-2 | 2 | 1-2 | 1-2 | 1-2 | 1-2 |
| Peel strength after retort (N/m) AL/CPP | 8 | 7 | 7 | 8 | 8 | 8 | 8 | 7 |

**[Table 2]**

| | Example 9 | Example 10 | Example 11 |
|---|---|---|---|
| Polyol U | 100 | 100 | 100 |
| Polyisocyanate I | 10 | 10 | 10 |
| Epoxy silane | | | |
| Aminosilane | | | |
| Mixture A | 1 | | |
| Mixture B | | 1 | |
| Mixture C | | | 1 |
| Phosphoric acid | | | |
| SMA | | | |
| Ethyl acetate | 160 | 160 | 160 |
| Amount migrated (µg/kg-food) | | | |
| Epoxy silane | 7 | 8 | 9 |
| Aminosilane | ND | ND | ND |
| Mixture A | ND | - | - |
| Mixture B | - | ND | - |
| Mixture C | - | - | ND |
| Hue of coating liquid | 2 | 1-2 | 1-2 |
| Peel strength after retort (N/m) AL/CPP | 7 | 8 | 7 |

**[Table 3]**

| | Comparative Example 1 | Comparative Example 2 | Comparative Example 3 |
|---|---|---|---|
| Polyol U | 100 | 100 | 100 |
| Polyisocyanate I | 10 | 10 | 10 |
| Epoxy silane | 1 | | |
| Aminosilane | | 1 | |
| Phosphoric acid | | | |
| SMA | | | |
| Ethyl acetate | 160 | 160 | 160 |
| Amount migrated (µg/kg-food) | | | |
| Epoxy silane | 140 | - | - |
| Aminosilane | - | ND | - |
| Hue of coating liquid | 1-2 | 7 | 1-2 |
| Peel strength after retort (N/m) AL/CPP | 7 | 7 | 2 |

### [Results]

As the results in Tables 1 and 3, in Examples 1 to 8 in which the reaction product of an epoxy silane and an aminosilane was used, the amount of the epoxy silane migrated was reduced compared to Comparative Example 1 in which only epoxy silane was used. In Comparative Example 2 in which aminosilane was added, migration of the silane compound was not confirmed; however, the coating liquid was colored.

In Examples 5 to 8, by adding phosphoric acid or a styrene-maleic anhydride resin, migration of the epoxy silane was further reduced.

Furthermore, Examples 9 to 11 in which a mixture of epoxy silane and amino silane was used provided good results with respect to the hue of coating liquid, which are comparable to those of the cases where the reaction product was used.

## Claims

1. A laminate adhesive composition, comprising:
a polyol (A);
a polyisocyanate (B); and
a silane coupling agent (C),
wherein the silane coupling agent (C) is a mixture of an epoxy silane (c1) and an aminosilane (c2).

2. The laminate adhesive composition according to Claim 1,
wherein the silane coupling agent (C) is a reaction product obtained by a reaction of the mixture of the epoxy silane (c1) and the aminosilane (c2).

3. The laminate adhesive composition according to Claim 1 or 2,
wherein the polyol (A) is a polyester polyol or a polyether polyol.

4. The laminate adhesive composition according to any one of Claim 1 to 3, further comprising:
a phosphoric acid derivative or a styrene-maleic anhydride copolymer.

5. The laminate adhesive composition according to any one of 1 to 4,
wherein the molar ratio between the epoxy silane (c1) and the aminosilane (c2) is within a range of 1/1 to 3/1.
